# EUROPEAN PATENT APPLICATION

(11) **EP 4 095 849 A1**
(43) Date of publication of application: **30.11.2022**
(21) Application number: 21208856.1
(22) Date of filing: 17.11.2021
(51) Int. Cl.: G10L 15/22, G10L 15/32, G10L 15/00

(54) **USAGE OF VOICE RECOGNITION CONFIDENCE LEVELS IN A PASSENGER INTERFACE**

(30) Priority: 28.05.2021 US 202117333219
(71) Applicant: Otis Elevator Company, Farmington CT 06032 (US)
(72) Inventor: HSU, Arthur, Farmington (US)
(74) Representative: Dehns

(57) **Abstract**

A voice recognition system (200) for an elevator system including: one or more microphones (210) configured to capture a voice command from an individual (201) and convert the voice command into an audio signal; a command arbitrator (230) including one or more speech interpretation systems (230A, 230B, 230C, 230D), the command arbitrator (230) being configured to analyze the audio signal and determine an interpreted command for the elevator system from the audio signal using the one or more speech interpretation systems(230A, 230B, 230C, 230D), wherein the interpreted command includes a confidence measure associated with the interpreted command, and wherein the confidence measure is an indicator depicting how confident the command arbitrator is that the interpreted command matches the voice command from the individual (201).

## Description

### BACKGROUND

The subject matter disclosed herein relates generally to the field of elevator systems, and specifically to a method and apparatus for receiving voice commands from passengers for elevator cars.

Conventional elevator calls may be submitted by a passenger pressing an elevator button near an elevator door.

### BRIEF SUMMARY

According to an embodiment, a voice recognition system for an elevator system is provided. The voice recognition system including: one or more microphones configured to capture a voice command from an individual and convert the voice command into an audio signal; a command arbitrator including one or more speech interpretation systems, the command arbitrator being configured to analyze the audio signal and determine an interpreted command for the elevator system from the audio signal using the one or more speech interpretation systems, wherein the interpreted command includes a confidence measure associated with the interpreted command, and wherein the confidence measure is an indicator depicting how confident the command arbitrator is that the interpreted command matches the voice command from the individual.

In addition to one or more of the features described herein, or as an alternative, further embodiments may include a controller configured to control operation of an elevator car of the elevator system, wherein the command arbitrator is configured to transmit the interpreted command to the controller, and wherein the controller is configured to control the operation of the elevator car in accordance with the interpreted command.

In addition to one or more of the features described herein, or as an alternative, further embodiments may include a controller configured to control operation of an elevator car of the elevator system, wherein the command arbitrator is configured to transmit the interpreted command to the controller if the confidence measure is greater than an acceptance level, and wherein the controller is configured to control the operation of the elevator car in accordance with the interpreted command.

In addition to one or more of the features described herein, or as an alternative, further embodiments may include at least one of: a speaker configured to emit an audible sound, wherein the command arbitrator is configured to transmit a confirmation request to the speaker if the confidence measure is within a confirmation level range, and wherein the speaker is configured to emit the confirmation request to the individual; or a display device configured to display text, wherein the command arbitrator is configured to transmit a confirmation request to the display device if the confidence measure is within a confirmation level range, and wherein the display device is configured to display the confirmation request to the individual.

In addition to one or more of the features described herein, or as an alternative, further embodiments may include that the one or more microphones are configured to capture a confirmation response from an individual responding to the confirmation request and convert the confirmation response into a second audio signal, and wherein the command arbitrator is configured to analyze the second audio signal and determine whether the confirmation response confirms the interpreted command from the second audio signal using the one or more speech interpretation system.

In addition to one or more of the features described herein, or as an alternative, further embodiments may include a controller configured to control operation of an elevator car of the elevator system, wherein the command arbitrator is configured to transmit the interpreted command to the controller if the confirmation response confirms the interpreted command, and wherein the controller is configured to control the operation of the elevator car in accordance with the interpreted command.

In addition to one or more of the features described herein, or as an alternative, further embodiments may include that the command arbitrator is configured to adjust how it determines the confidence measure in response to whether the confirmation response confirms the interpreted command.

In addition to one or more of the features described herein, or as an alternative, further embodiments may include that if the confirmation response confirms the interpreted command, then the command arbitrator is configured to increase the confidence measure or be more lenient when analyzing audio signals and determining the confidence measure.

In addition to one or more of the features described herein, or as an alternative, further embodiments may include that if the confirmation response does not confirm the interpreted command, then the command arbitrator is configured to decrease the confidence measure or be more stringent when analyzing audio signals and determining the confidence measure.

In addition to one or more of the features described herein, or as an alternative, further embodiments may include at least one of: a speaker configured to emit an audible sound, wherein the command arbitrator is configured to transmit a repeat request to the speaker if the confidence measure is within a repeat level range, and wherein the speaker is configured to emit the repeat request to the individual; or a display device configured to display text, wherein the command arbitrator is configured to transmit a confirmation request to the display device if the confidence measure is within a confirmation level range, and wherein the display device is configured to display the confirmation request to the individual.

In addition to one or more of the features described herein, or as an alternative, further embodiments may include that each of the one or more speech interpretation systems include a different computer-executable instruction to determine the interpreted command from the audio signal.

In addition to one or more of the features described herein, or as an alternative, further embodiments may include that each of the one or more speech interpretation systems analyze languages differently.

In addition to one or more of the features described herein, or as an alternative, further embodiments may include that the command arbitrator is configured to determine a language of the voice command from the audio signal and assign analysis of the voice command to a particular speech interpretation system of the one or more speech interpretation systems that is most proficient out of the one or more speech interpretation systems to analyze the language.

In addition to one or more of the features described herein, or as an alternative, further embodiments may include that each of the one or more speech interpretation system analyzes dialects or accents differently.

In addition to one or more of the features described herein, or as an alternative, further embodiments may include that the command arbitrator is configured to determine a dialect or an accent of the voice command from the audio signal and assign analysis of the voice command to a particular speech interpretation system of the one or more speech interpretation systems that is most proficient out of the one or more speech interpretation systems to analyze the dialect or the accent.

In addition to one or more of the features described herein, or as an alternative, further embodiments may include that the command arbitrator is configured to analyze the audio signal in a context of the elevator system.

In addition to one or more of the features described herein, or as an alternative, further embodiments may include that the one or more microphones includes multiple microphones, wherein the command arbitrator is configured to determine the interpreted command from the audio signal received from each of the multiple microphones, wherein the command arbitrator is configured to compare the interpreted command determined from the audio signal received from each of the multiple microphones.

In addition to one or more of the features described herein, or as an alternative, further embodiments may include that the one or more microphones are located in an elevator car of the elevator system, an elevator lobby, or a turnstile.

According to another embodiment, a method of operating an elevator system is provided. The method including: capturing, using one or more microphones, a voice command from an individual; converting the voice command into an audio signal; analyzing, using a command arbitrator, the audio signal, the command arbitrator including one or more speech interpretation systems; determining, using the command arbitrator, an interpreted command for the elevator system from the audio signal using the one or more speech interpretation systems, wherein the interpreted command includes a confidence measure associated with the interpreted command, and wherein the confidence measure is an indicator depicting how confident the command arbitrator is that the interpreted command matches the voice command from the individual.

According to another embodiment, a computer program product tangibly embodied on a non-transitory computer readable medium is provided. The computer program product including instructions that, when executed by a processor, cause the processor to perform operations including: capturing, using one or more microphones, a voice command from an individual; converting the voice command into an audio signal; analyzing, using a command arbitrator, the audio signal, the command arbitrator including one or more speech interpretation systems; determining, using the command arbitrator, an interpreted command for the elevator system from the audio signal using the one or more speech interpretation systems, wherein the interpreted command includes a confidence measure associated with the interpreted command, and wherein the confidence measure is an indicator depicting how confident the command arbitrator is that the interpreted command matches the voice command from the individual.

Technical effects of embodiments of the present disclosure include receiving a voice command, analyzing the voice command, and determining an interpreted command to be sent to the controller of the elevator car.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 illustrates a schematic view of a voice recognition system, in accordance with an embodiment of the disclosure; and
FIG. 3 is a flow chart of method of operating an elevator system, in accordance with an embodiment of the disclosure.

### DETAILED DESCRIPTION

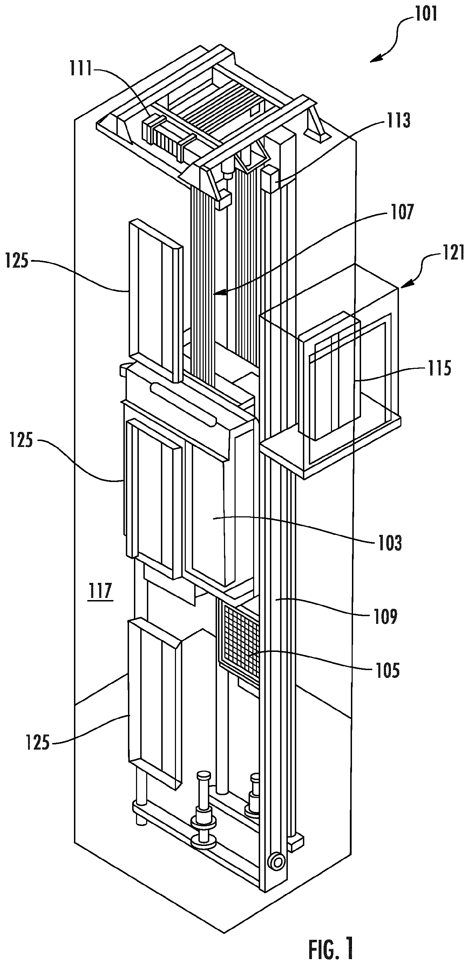

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail 109, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car 103 and/or counterweight 105, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller 115 may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor or pinched wheel propulsion to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system.

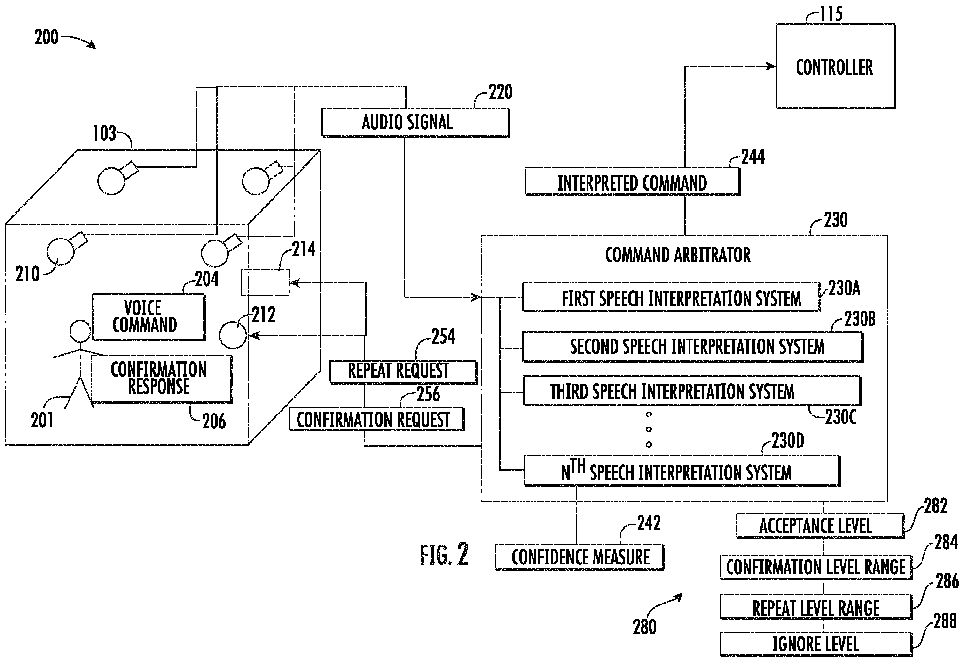

Referring now to FIG. 2, with continued reference to FIG. 1, a voice recognition system 200 is illustrated, in accordance with an embodiment of the present disclosure. It should be appreciated that, although particular systems are separately defined in the schematic block diagrams, each or any of the systems may be otherwise combined or separated via hardware and/or software.

As illustrated in FIG. 2, the voice recognition system 200 includes one or microphones 210 configured to capture a voice command 204 from an individual 201 and convert the voice command 204 into an audio signal 220. The audio signal 220 may be a digital audio signal. The microphones 210 may be strategically placed in various different locations throughout the elevator car 103 and are not limited to the locations shown in FIG. 2. The audio signals 220 may be voice commands 204 spoken by an individual 201 within the elevator car 103. For example, the voice command 204 may be "Please take me to the fourth floor", "Please hold the elevator doors open", or "Please close the elevator doors". It is understood that the location of the microphones 210 is not limited to being within the elevator car 103 and the microphones 103 may be located outside of the elevator car 103 in other locations. For example, the microphones 210 may be located in an elevator lobby, turnstile, or any other access control point.

The voice recognition system 200 also includes a command arbitrator 230. There may be a separate command arbitrator 230 incorporated into each of the one or more microphones 210 or the command arbitrator 230 may be a sperate component from the microphones 210, as illustrated in FIG. 2. The command arbitrator 230 may be computer-executable instructions or an electronic controller including a processor and an associated memory comprising computer-executable instructions (i.e., computer program product) that, when executed by the processor, cause the processor to perform various operations. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

The one or more microphones 210 are in communication with the command arbitrator 230. The one or more microphones 210 may be in wired and/or wireless communication with the command arbitrator 230. Each of the one or more microphones 210 are configured to transmit the audio signal 220 to the command arbitrator 230. The command arbitrator 230 includes one or more speech interpretation systems 230A, 230B, 230C, 230D configured to analyze the audio signal 220. The speech interpretation systems 230A, 230B, 230C, 230D may be proprietary computer-executable instructions. The command arbitrator 230 is configured to analyze the audio signal 220 and determine an interpreted command 244 for the elevator car 103 from the audio signal 220 using the one or more speech interpretation systems 230A, 230B, 230C, 230D. Each interpreted command 244 may have a confidence measure 242 that is associated with the interpreted command 244. The confidence measure 242 may be an indicator depicting how confident the command arbitrator 230 is that the interpreted command 244 matches the voice command 204 from the individual 201. Matches may mean is equivalent to. This indicator may be expressed as a percentage. The confidence measure 242 may range from 0% to 100%. In one example, the confidence measure 242 may be 100%, which indicates that the command arbitrator 230 is 100% sure that the interpreted commands 244 matches the voice command 204 from the individual 201. In another example, the confidence measure 242 may be 0%, which indicates that the command arbitrator 230 is 0% sure that the interpreted commands 244 does not match the voice command 204 from the individual 201. The confidence measure 242 may also be multi- dimensional and rather than a single percentage output, the confidence measure 242 may include multiple different percentage measurement outputs relating to different factors, including, but not limited to, a quality of the audio signal 220, signal-to-noise ratio, and a consistency of match to a predefined reference speech pattern or learned speech pattern.

In one embodiment, the command arbitrator 230 may include only a single speech interpretation system 230A, such as, for example, the first speech interpretation system 230A. In another embodiment, the command arbitrator 230 may include any number of speech interpretation systems 230A, 230B, 230C, 230D, such as, for example, a first speech interpretation system 230A, a second speech interpretation system 230B, a third speech interpretation system 230C, ...., an Nth speech interpretation system 230D.

Each of the speech interpretation systems 230A, 230B, 230C, 230D may include a different computer-executable instructions to determine the interpreted command 244 from the audio signal 220. The different computer-executable instructions may have been developed and/or sold by different companies. Each of the speech interpretation systems 230A, 230B, 230C, 230D may analyze languages differently. Each of the speech interpretation systems 230A, 230B, 230C, 230D may analyze dialects or accents differently.

Some of the different proprietary computer-executable instructions may work better with some languages than other and some of the different computer-executable instructions may work better with some dialects or accents than others. If a specific language is encountered, the command arbitrator 230 may defer to the speech interpretation systems 230A, 230B, 230C, 230D that is most proficient at analyzing that language. The command arbitrator 230 is configured to determine a language of the voice command 204 from the audio signal 220 and assign analysis of the voice command 204 to a particular speech interpretation system of the one or more speech interpretation systems 230A, 230B, 230C, 230D that is most proficient out of the one or more speech interpretation systems 230A, 230B, 230C, 230D to analyze the language. For example, the command arbitrator 230 determines that voice command 204 is in French and the first speech interpretation system 230A is the most proficient of the different speech interpretation systems 230A, 230B, 230C, 230D at analyzing French, then the command arbitrator 230 may have the first speech interpretation system 230A analyze the audio signal 220 from the voice command 204 that is in French.

If a specific dialect is encountered, the command arbitrator 230 may defer to the speech interpretation systems 230A, 230B, 230C, 230D that is most proficient at analyzing that dialect. The command arbitrator 230 is configured to determine a dialect of the voice command 204 from the audio signal 220 and assign analysis of the voice command 204 to a particular speech interpretation system of the one or more speech interpretation systems 230A, 230B, 230C, 230D that is most proficient out of the one or more speech interpretation systems 230A, 230B, 230C, 230D to analyze the dialect. In an example, the command arbitrator 230 determines that voice command 204 has a Boston accent and the first speech interpretation system 230A is the most proficient of the different speech interpretation systems 230A, 230B, 230C, 230D at analyzing a Boston accent, then the command arbitrator 230 may have the first speech interpretation system 230A analyze the audio signal 220 from the voice command 204 that has a Boston accent. In this way, the command arbitrator 230 may operate as a coordinator by selecting the speech interpretation systems 230A, 230B, 230C, 230D that is best capable of analyzing the voice command 204.

The command arbitrator 230 may be configured command each speech interpretation systems 230A, 230B, 230C, 230D to analyze each audio signal 220 and each speech interpretation systems 230A, 230B, 230C, 230D may produce an interpreted command 244 with a confidence measure 242. The command arbitrator 230 may then select the interpreted command 244 with the highest confidence measure 242 and send that interpreted command 244 to the controller 115, which will control operation of the elevator car 103 in accordance with the interpreted command 244.

If multiple microphones 210 are capturing audio signals 220 then the command arbitrator 230 may be configured to determine the interpreted command 244 from the audio signal 220 received from each of the multiple microphones 210. The command arbitrator 230 may be configured to compare the interpreted command 244 determined from the audio signal 220 received from each of the multiple microphones 210. The different interpreted commands 244 from each microphone 210 may be compared to each other to see if they are the same. The command arbitrator 230 sends the interpreted command 244 to the controller 115 if the interpreted command 244 matches other interpreted commands 244 from different microphones 210. Additionally, different confidence measures 242 may also be associated with different microphones 210. The interpreted command 244 of the same voice command 204 from different microphones 210 may be different, in which case the microphone 210 producing an interpreted command 244 with the highest confidence measure 242 would be given most weight.

The command arbitrator 230 may also be able to distinguish between the different microphones 210 and adjust analysis of the audio signal 220 from a specific microphone 210 based on a filter of the specific microphone 210. The filter may be a digital or physical filter being used by the specific microphone 210.

The command arbitrator 230 may also analyze the audio signal 220 in the context of what should be said. In an embodiment, the command arbitrator 230 is configured to analyze the audio signal 220 in the context of an elevator system 101. If the confidence measure 242 is high but the interpreted command 244 has nothing to do with elevators, then the command arbitrator 230 may not send the interpreted command 244 to the controller 115. In one example, if the confidence measure 242 is high but the interpreted command 244 states "for four peas", then the command arbitrator 230 may not send the interpreted command 244 to the controller 115. In this example, the master command 230 may have miss interpreted the voice command 204 of "fourth floor please" for "for four pease".

The voice recognition system 200 includes a speaker 212 configured to emit an audible sound. The command arbitrator 230 is connected to the speaker 212. The command arbitrator 230 may be connected to the speaker 212 via wired connection or a wireless connection. The voice recognition system 200 may alternatively or additionally includes a display device 214 configured to display text, such as, for example, a computer monitor or television. The command arbitrator 230 is connected to the display device. The command arbitrator 230 may be connected to the display device 214 via wired connection or a wireless connection.

The command arbitrator 230 may utilize multiple different confidence thresholds 280 to govern actions in response to the audio signals 220 received. The command arbitrator 230 may include an acceptance level 282 and if the confidence measure 242 is greater than the acceptance level 282, then the interpreted command 244 may be transmitted to the controller 115. The controller 115 may control operation of the elevator car 103 in accordance with the interpreted command 244.

The command arbitrator 230 may include a confirmation level range 284 and if the confidence measure 242 is within the confirmation level range 284, then the command arbitrator 230 will emit a confirmation request 256 to the individual 201 through the microphone 210 to confirm the interpreted command 244. The confirmation level range 284 is less than the acceptance level 282.

If the confidence measure 242 is within the confirmation level range 284, then the command arbitrator 230 may be configured to convey a confirmation request 256 to the speaker 212 and the speaker 212 is configured to emit the confirmation request 256 to the individual 201. Alternatively or in addition to the speaker 212, if the confidence measure 242 is within the confirmation level range 284, then the command arbitrator 230 may be configured to convey a confirmation request 256 to the display device 214 and the display device 214 is configured to display the confirmation request 256 to the individual 201. The confirmation request 256 may be a simple binary question, such as, for example, a yes or no question. In one example, the confirmation request 256 may state, "Do you mean the first floor?". The microphone 210 may be configured to receive a confirmation response 206 from the individual 201 responding to the confirmation request 256 and convert the confirmation response 206 into an audio signal 220 that is analyzed by the command arbitrator 230. The confirmation request 256 may be repeated as necessary. If multiple speakers 212 and microphones 210 are utilized, then the confirmation request 256 may be transmitted only to the speaker 212 closest to the individual 201. The speaker 212 closest to the individual 201 may be determined by determining the microphone 210 with the highest confidence measure 242, which would indicate that the individual 201 may be closest to that microphone 210 and then determining the speaker 212 closest to the microphone 210 with the highest confidence measure 242.

The confirmation response 206 may confirm or deny the question posed in the confirmation request 256. If the confirmation response 206 confirms the interpreted command 244 then the command arbitrator 230 may transmit the interpreted command 244 to the controller 115 and the controller 115 may control operation of the elevator car 103 in accordance with the interpreted command 244.

The command arbitrator 230 may also adjust how it determines the confidence measure 242 in response to whether the confirmation response 206 confirms the interpreted command 244. In one example, if the confirmation response 206 confirms the interpreted command 244, then the command arbitrator 230 is configured to increase the confidence measure 242 or be more lenient when analyzing audio signals 220 and determining the confidence measure 242 since its analysis was correct. In another example, if the confirmation response 206 does not confirm the interpreted command 244, then the command arbitrator 230 is configured to decrease the confidence measure 242 or be more stringent when analyzing audio signals 220 and determining the confidence measure 242 since its analysis was incorrect. In yet another example, if the confirmation responses 206 consistently confirms the interpreted command 244, rather than increase the confirmation measure 242, the confidence threshold 280 may be relaxed or lowered. The confidence threshold 280 may be the acceptance level 282, the confirmation level range 284, the repeat level range 286, and/or the ignore level 288 as defined herein.

The command arbitrator 230 may include a repeat level range 286 and if the confidence measure 242 is within the repeat level range 286, then the command arbitrator 230 transmit a repeat request 254 to the speaker 212 and the speaker 212 will emit the repeat request 254 to the individual 201 to ask the individual 201 to repeat the voice command 204. Alternatively or in addition to the speaker 212, if the confidence measure 242 is within the repeat level range 286, then the command arbitrator 230 transmit a repeat request 254 to the display device 214 and the display device 214 will display the repeat request 254 to the individual 201 to ask the individual 201 to repeat the voice command 204. The repeat level range 286 is less than the confirmation level range 284. The repeat request 254 may be utilized when the command arbitrator 230 cannot determine an interpreted command 244 from the audio signal 220. The repeat request 254 may be repeated as necessary. If multiple speakers 212 and microphones 210 are utilized, then the repeat request 254 may be transmitted only to the speaker 212 closest to the individual 201. The speaker 212 closest to the individual 201 may be determined by determining the microphone 210 with the highest confidence measure 242, which would indicate that the individual 201 may be closest to that microphone 210 and then determining the speaker 212 closest to the microphone 210 with the highest confidence measure 242.

The individual 201 will repeat the voice command 204 and then the command arbitrator 230 will analyze the audio signal 220 from the voice command 204 all over again.

The command arbitrator 230 may include an ignore level 288 and if the confidence measure 242 is less than the ignore level 288, then the command arbitrator 230 will ignore the audio signal 220 and assume it was just background noise or an irrelevant conversation. In a non-limiting example to illustrate the different confidence levels, the acceptance level 282 may be a confidence measure 242 greater than or equal to 90%, the confirmation level range 284 may be a confidence measure 242 between 70%-90%, the repeat level range 286 may be a confidence measure 242 between 20% and 70%, and the ignore level 288 may be a confidence measure 242 of less than or equal to 20%.

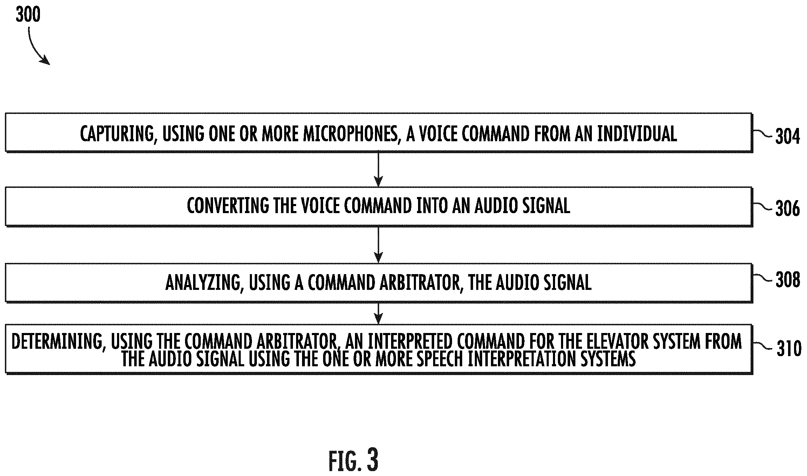

Referring now to FIG. 3, with continued reference to FIGS. 1-2, a flow chart of method 300 of operating an elevator system 101 is illustrated, in accordance with an embodiment of the disclosure. In an embodiment, the method 300 is performed by the voice recognition system 200 of FIG. 2.

At block 304, one or more microphones 210 capture a voice command 204 from an individual 201. At block 306, the voice command 204 is converted into an audio signal 220 by the one or more microphones 210. At block 308, a command arbitrator 230 analyzes the audio signal 220. The command arbitrator 230 includes one or more speech interpretation systems 230A, 230B, 230C, 230D.

At block 310, the command arbitrator 230 determines an interpreted command 244 for the elevator system 101 from the audio signal 220 using the one or more speech interpretation systems 230A, 230B, 230C, 230D. The interpreted command 244 includes a confidence measure 242 associated with the interpreted command 244. The confidence measure 242 is an indicator depicting how confident the command arbitrator 230 is that the interpreted command 244 matches the voice command 204 from the individual 201.

The method 300 may further include that the interpreted command 244 is transmitted to the controller 115 of the elevator car 103 and the controller 115 controls operation of the elevator car 103 in accordance with the interpreted command 244. Controlling operation of the elevator car 103 in accordance with the interpreted command 244 may include closing the elevator doors and/or moving the elevator car 103 to a floor specified in the voice command 204.

While the above description has described the flow process of FIG. 3 in a particular order, it should be appreciated that unless otherwise specifically required in the attached claims that the ordering of the steps may be varied.

The present invention may be a system, a method, and/or a computer program product at any possible technical detail level of integration. The computer program product may include a computer readable storage medium (or media) having computer readable program instructions thereon for causing a processor to carry out aspects of the present invention.

As described above, embodiments can be in the form of processor-implemented processes and devices for practicing those processes, such as processor. Embodiments can also be in the form of computer program code (e.g., computer program product) containing instructions embodied in tangible media (e.g., non-transitory computer readable medium), such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A voice recognition system for an elevator system, the voice recognition system comprising:
one or more microphones configured to capture a voice command from an individual and convert the voice command into an audio signal;
a command arbitrator comprising one or more speech interpretation systems, the command arbitrator being configured to analyze the audio signal and determine an interpreted command for the elevator system from the audio signal using the one or more speech interpretation systems,
wherein the interpreted command comprises a confidence measure associated with the interpreted command, and
wherein the confidence measure is an indicator depicting how confident the command arbitrator is that the interpreted command matches the voice command from the individual.

2. The voice recognition system of claim 1, further comprising:
a controller configured to control operation of an elevator car of the elevator system,
wherein the command arbitrator is configured to transmit the interpreted command to the controller, and
wherein the controller is configured to control the operation of the elevator car in accordance with the interpreted command;
optionally wherein the command arbitrator is configured to transmit the interpreted command to the controller if the confidence measure is greater than an acceptance level.

3. The voice recognition system of claim 1 or 2, further comprising at least one of:
a speaker configured to emit an audible sound, wherein the command arbitrator is configured to transmit a confirmation request to the speaker if the confidence measure is within a confirmation level range, and wherein the speaker is configured to emit the confirmation request to the individual; or
a display device configured to display text, wherein the command arbitrator is configured to transmit a confirmation request to the display device if the confidence measure is within a confirmation level range, and wherein the display device is configured to display the confirmation request to the individual.

4. The voice recognition system of claim 3, wherein the one or more microphones are configured to capture a confirmation response from an individual responding to the confirmation request and convert the confirmation response into a second audio signal, and
wherein the command arbitrator is configured to analyze the second audio signal and determine whether the confirmation response confirms the interpreted command from the second audio signal using the one or more speech interpretation system.

5. The voice recognition system of claim 4, further comprising:
a controller configured to control operation of an elevator car of the elevator system,
wherein the command arbitrator is configured to transmit the interpreted command to the controller if the confirmation response confirms the interpreted command, and
wherein the controller is configured to control the operation of the elevator car in accordance with the interpreted command.

6. The voice recognition system claim 4 or 5, wherein the command arbitrator is configured to adjust how it determines the confidence measure in response to whether the confirmation response confirms the interpreted command;
wherein optionally:
if the confirmation response confirms the interpreted command, then the command arbitrator is configured to increase the confidence measure or be more lenient when analyzing audio signals and determining the confidence measure; or
if the confirmation response does not confirm the interpreted command, then the command arbitrator is configured to decrease the confidence measure or be more stringent when analyzing audio signals and determining the confidence measure.

7. The voice recognition system of any preceding claim, further comprising at least one of:
a speaker configured to emit an audible sound, wherein the command arbitrator is configured to transmit a repeat request to the speaker if the confidence measure is within a repeat level range, and wherein the speaker is configured to emit the repeat request to the individual; or
a display device configured to display text, wherein the command arbitrator is configured to transmit a confirmation request to the display device if the confidence measure is within a confirmation level range, and wherein the display device is configured to display the confirmation request to the individual.

8. The voice recognition system of any preceding claim, wherein each of the one or more speech interpretation systems include a different computer-executable instruction to determine the interpreted command from the audio signal.

9. The voice recognition system of any preceding claim, wherein each of the one or more speech interpretation systems analyze languages differently; and
wherein the command arbitrator is optionally configured to determine a language of the voice command from the audio signal and assign analysis of the voice command to a particular speech interpretation system of the one or more speech interpretation systems that is most proficient out of the one or more speech interpretation systems to analyze the language.

10. The voice recognition system of any preceding claim, wherein each of the one or more speech interpretation system analyzes dialects or accents differently; and
wherein the command arbitrator is optionally configured to determine a dialect or an accent of the voice command from the audio signal and assign analysis of the voice command to a particular speech interpretation system of the one or more speech interpretation systems that is most proficient out of the one or more speech interpretation systems to analyze the dialect or the accent.

11. The voice recognition system of any preceding claim, wherein the command arbitrator is configured to analyze the audio signal in a context of the elevator system.

12. The voice recognition system of any preceding claim, wherein the one or more microphones includes multiple microphones,
wherein the command arbitrator is configured to determine the interpreted command from the audio signal received from each of the multiple microphones,
wherein the command arbitrator is configured to compare the interpreted command determined from the audio signal received from each of the multiple microphones.

13. The voice recognition system of any preceding claim, wherein the one or more microphones are located in an elevator car of the elevator system, an elevator lobby, or a turnstile.

14. A method of operating an elevator system, the method comprising:
capturing, using one or more microphones, a voice command from an individual;
converting the voice command into an audio signal;
analyzing, using a command arbitrator, the audio signal, the command arbitrator comprising one or more speech interpretation systems;
determining, using the command arbitrator, an interpreted command for the elevator system from the audio signal using the one or more speech interpretation systems,
wherein the interpreted command comprises a confidence measure associated with the interpreted command, and
wherein the confidence measure is an indicator depicting how confident the command arbitrator is that the interpreted command matches the voice command from the individual.

15. A computer program product tangibly embodied on a non-transitory computer readable medium, the computer program product including instructions that, when executed by a processor, cause the processor to perform operations comprising:
capturing, using one or more microphones, a voice command from an individual;
converting the voice command into an audio signal;
analyzing, using a command arbitrator, the audio signal, the command arbitrator comprising one or more speech interpretation systems;
determining, using the command arbitrator, an interpreted command for the elevator system from the audio signal using the one or more speech interpretation systems,
wherein the interpreted command comprises a confidence measure associated with the interpreted command, and
wherein the confidence measure is an indicator depicting how confident the command arbitrator is that the interpreted command matches the voice command from the individual.
